# EUROPEAN PATENT APPLICATION

(11) **EP 4 643 978 A1**
(43) Date of publication of application: **05.11.2025**
(21) Application number: 25166020.5
(22) Date of filing: 25.03.2025
(51) Int. Cl.: B01D 53/86, B01D 53/88, B01J 8/02

(54) **WASTE GAS TREATMENT EQUIPMENT USING HIGH FREQUENCY HEAT SOURCE**

(30) Priority: 29.04.2024 TW 113115968
(71) Applicant: Wholetech System Hitech Limited Co., Ltd., 30091 Niupu Vil. Hsinchu City (TW)
(72) Inventor: LEE, Chien-Lin, 30059 Hsinchu City (TW); TSENG, Wei-Ting, 603 Chiayi County (TW); WANG, Shih-Ming, 745009 Tainan City (TW); WU, Hung-Wei, 725 Tainan City (TW); HSU, Mao-Hsiang, 621006 Chiayi County (TW)
(74) Representative: Reddie & Grose LLP

(57) **Abstract**

A waste gas treatment equipment includes a reactor (51) defining a waste gas reaction space (510), an induction heating pipe (52) disposed in and dividing the waste gas reaction space (510) into inner and outer spaces (5101, 5102), a coil protector (57) disposed in the outer space (5102) and surrounding the induction heating pipe (52), a flow guide tube (58) inserted into the inner space (5101) through a bottom wall (511) of the reactor (51), and a high frequency coil (53) disposed in the coil protector (57). A catalyst barrel (59) has a barrel body (591) sleeved on a top portion of the flow guide tube (58), including an outer wall (5912) provided with a plurality of through holes (590), and defining a receiving space (5914) communicating with the through holes (590) and for receiving a catalyst (599). A scraper mechanism (55, 55') is provided in the reactor (51) for scraping dust or crystals attached to the inner wall surface of the flow guide tube (58) and the outer wall (5912) of the barrel body (591).

## Description

This disclosure relates to a waste gas treatment equipment, and more particularly to a waste gas treatment equipment using a high frequency heat source.

Nitrous oxide (N₂O) is widely used in semiconductor manufacturing process, and the concentration used can be as high as 99.999%. However, nitrous oxide and carbon dioxide (CO₂) are both greenhouse gases, and the temperature effect caused by nitrous oxide is about 296 times that of carbon dioxide. Thus, based on the concepts of environmental protection and sustainable development of the earth, it is necessary to find ways to reduce the concentration of the nitrous oxide and similar waste gases (hereinafter referred to as special gases) emitted during the semiconductor manufacturing process.

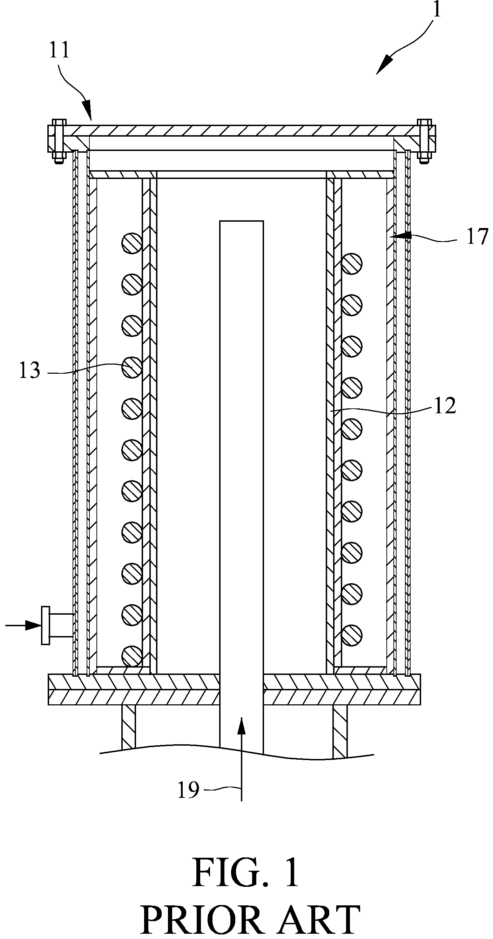

Referring to FIG. 1, an existing waste gas treatment equipment for using a high frequency heat source includes a heating portion 1 for heating a waste gas 19. The heating portion 1 includes a reactor 11, an induction heating pipe 12, a high frequency coil 13, and a coil protector 17. The high frequency coil 13 uses high frequency alternating current to generate induced current in the induction heating pipe 12 and to cause the induction heating pipe 12 to generate heat.

However, because the reaction temperature of the waste gas 19 is as high as 1050°C, the power of the high frequency alternating current used by the high frequency coil 13 is also high, resulting in more energy consumption during operation. Thus, it is necessary to find a solution to this problem.

Therefore, an object of the present disclosure is to provide a waste gas treatment equipment that uses a high frequency heat source and that can alleviate at least one of the drawbacks of the prior art.

According to this disclosure, the waste gas treatment equipment uses a high frequency heat source for treating a waste gas, and includes a heating portion for heating the waste gas. The heating portion includes a reactor, an induction heating pipe, a high frequency coil, a coil protector, a flow guide tube, a catalyst barrel, and a scraper mechanism. The reactor defines a waste gas reaction space for reaction of the waste gas, and has a bottom wall, a surrounding wall extending upwardly from the bottom wall, and a top wall covering a top end of the surrounding wall and cooperating with the bottom and surrounding walls to define the waste gas reaction space. The induction heating pipe is disposed in and divides the waste gas reaction space into inner and outer spaces. The inner space is an interior of the induction heating pipe. The outer space is located between the induction heating pipe and the surrounding wall.

The coil protector is hollow, is disposed in the outer space of the waste gas reaction space, and surrounds the induction heating pipe. The flow guide tube is inserted into the inner space of the waste gas reaction space through the bottom wall of the reactor, is spaced apart from the top wall of the reactor and an inner peripheral surface of the induction heating pipe, and is used for guiding the waste gas from upstream to the inner space. The induction heating pipe is concentrically disposed between the flow guide tube and the coil protector. The high frequency coil is disposed in the coil protector, surrounds the induction heating pipe, and is used for generating induced current in the induction heating pipe to cause the induction heating pipe to generate heat for heating the waste gas flowing into the inner space through the flow guide tube. The coil protector encloses the high frequency coil to separate the high frequency coil from the induction heating pipe and to simultaneously isolate the high frequency coil from the waste gas.

The catalyst barrel has a barrel body that is a hollow tubular body, that is sleeved on a top portion of the flow guide tube, and that includes an inner wall abutting against the flow guide tube, an outer wall radially spaced apart from the inner wall and provided with a plurality of through holes communicating with the inner space, and a bottom wall connected to bottom ends of the inner and outer walls and cooperating with the inner and outer walls to define a receiving space that communicates with the inner space through the through holes and that is adapted to receive a catalyst. The through holes are configured to allow entry of the waste gas into the receiving space of the barrel body so as to react with the catalyst and reduce the reaction temperature of the waste gas to thereby reduce the power of high frequency alternating current used by the high frequency coil.

The scraper mechanism includes an inner scraper inserted into the flow guide tube and surrounded by an inner wall surface of the flow guide tube, an outer scraper inserted into the induction heating pipe and located between the outer wall of the barrel body and the inner peripheral surface of the induction heating pipe, and a drive member connected to the inner and outer scrapers for driving the same to rotate therewith. The scraper mechanism is configured to scrape dust or crystals attached to the inner wall surface of the flow guide tube and the outer wall of the barrel body.

Other features and advantages of the disclosure will become apparent in the following detailed description of the embodiment with reference to the accompanying drawings. It is noted that various features may not be drawn to scale.
FIG. 1 is a fragmentary enlarged sectional view of a heating portion of an existing waste gas treatment equipment.
FIG. 2 is a schematic configuration diagram of a waste gas treatment equipment according to the first embodiment of the present disclosure.
FIG. 3 is a fragmentary enlarged sectional view of a heating portion of the first embodiment.
FIG. 4 is a perspective view of a scraper mechanism of the heating portion of the first embodiment.
FIG. 5 is an enlarged sectional view of a catalyst barrel of the heating portion of the first embodiment.
FIG. 6 is a fragmentary enlarged sectional view of a heating portion of the waste gas treatment equipment according to the second embodiment of the present disclosure.
FIG. 7 is a perspective view of a scraper mechanism of the second embodiment.

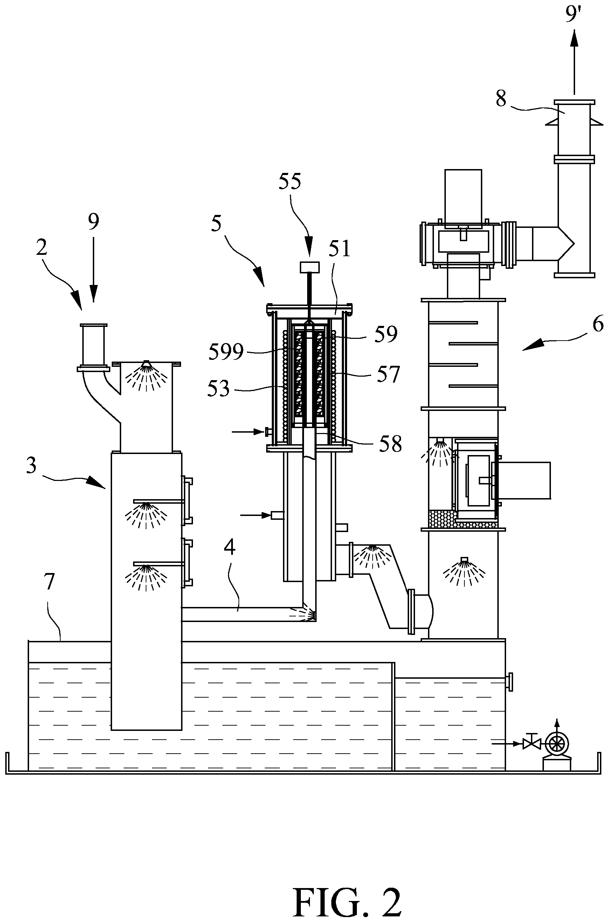

Referring to FIGS. 2 to 4, a waste gas treatment equipment according to the first embodiment of the present disclosure uses a high frequency heat source for treating a waste gas 9, and includes an inlet portion 2, a front washing portion 3, a waste gas transmission pipe 4, a heating portion 5, a rear washing portion 6, a gas discharge portion 8, and a water sink 7. In this embodiment, the waste gas 9 is exemplified as nitrous oxide.

An air inlet of the inlet portion 2 communicates with a front end manufacturing apparatus (not shown) for guiding the waste gas 9 from the front end manufacturing apparatus into the waste gas treatment equipment of this disclosure.

An air inlet of the front washing portion 3 communicates with an air outlet of the inlet portion 2. The front washing portion 3 uses a wet washing method, in which dust, water-soluble gases, and other components in the waste gas 9 are removed by rinsing with water. The waste gas 9 leaves the front washing portion 3 after going through an initial washing, flows through the waste gas transmission pipe 4, and enters the heating portion 5.

In this embodiment, the heating portion 5 includes a reactor 51, an induction heating pipe 52, a high frequency coil 53, a coil protector 57, a flow guide tube 58, a catalyst barrel 59, a thermal insulation unit 54, and a scraper mechanism 55.

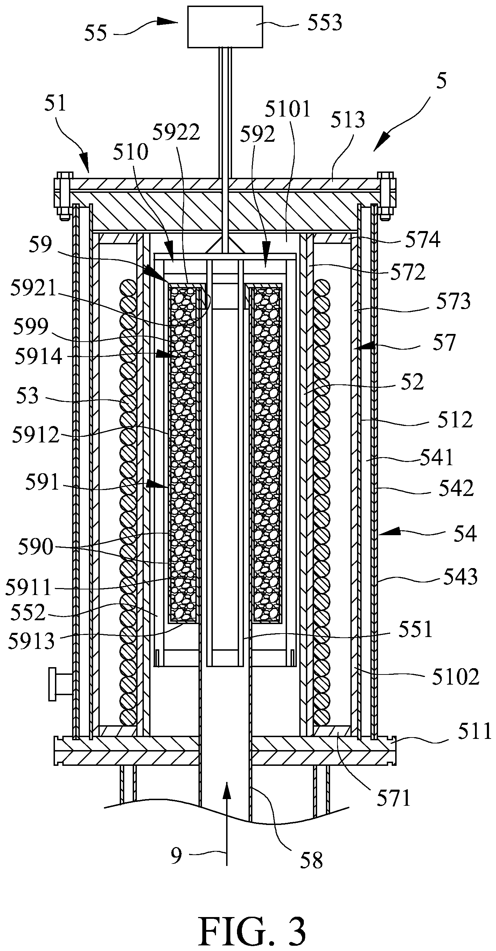

As shown in FIG. 3, the reactor 51 has a bottom wall 511, a surrounding wall 512 extending upwardly from the bottom wall 511, and a top wall 513 covering a top end of the surrounding wall 512 and cooperating with the bottom wall 511 and the surrounding wall 512 to define a waste gas reaction space 510.

The induction heating pipe 52 is disposed in the waste gas reaction space 510, and divides the same into an inner space 5101 and an outer space 5102. The inner space 5101 is an interior of the induction heating pipe 52. The outer space 5102 is located between the induction heating pipe 52 and the surrounding wall 512. In this embodiment, a material of the induction heating pipe 52 may be graphite, a conductive metal, or other conductive materials.

The coil protector 57 is hollow, is disposed in the outer space 5102 of the waste gas reaction space 510, and surrounds the induction heating pipe 52. In this embodiment, a material of the coil protector 57 may be, for example, a high nickel alloy or a ceramic. The coil protector 57 includes a lower ring plate 571 disposed on the bottom wall 511 of the reactor 51, an inner tube 572 extending upwardly from an inner periphery of the lower ring plate 571 and abutting against an outer peripheral surface of the induction heating pipe 52, an outer tube 573 extending upwardly from an outer periphery of the lower ring plate 571, and an upper ring plate 574 hermetically connected to top ends of the outer and inner tubes 573, 572.

In this embodiment, the flow guide tube 58 is inserted into the inner space 5101 of the waste gas reaction space 510 through the bottom wall 511 of the reactor 51, is spaced apart from the top wall 513 of the reactor 51 and an inner peripheral surface of the induction heating pipe 52, and is used to guide the waste gas 9 from upstream to the inner space 5101 of the waste gas reaction space 510. The induction heating pipe 52 is concentrically disposed between the flow guide tube 58 and the coil protector 57.

The high frequency coil 53 is disposed in the coil protector 57, and is wound around an inner peripheral surface of the inner tube 572 of the coil protector 57 to surround the induction heating pipe 52. The high frequency coil 53 is used for generating induced current in the induction heat pipe 52 to cause the induction heating pipe 52 to generate heat for heating the waste gas 9 flowing into the inner space 5101 of the waste gas reaction space 510 through the flow guide tube 58. Since the high frequency coil 53 is used for generating the induced current in the induction heating pipe 52 to cause the induction heating pipe 52 to generate heat, the waste gas 9 entering the reactor 51 can be heated and decomposed to lower the concentration thereof.

The coil protector 57 encloses the high frequency coil 53 to separate the high frequency coil 53 from the induction heating pipe 52 and to simultaneously isolate the high frequency coil 53 from the waste gas 9, thereby preventing the high frequency coil 53 from being corroded by the waste gas 9. Specifically, the upper and lower ring plates 574, 571 and the inner and outer tubes 572, 573 of the coil protector 57 cooperatively hermetically enclose the high frequency coil 53 to isolate the high frequency coil 53 from the waste gas 9 and to protect the high frequency coil 53 from being corroded by the waste gas 9. Thus, the service life of the high frequency coil 53 can be prolonged by using the coil protector 57.

The thermal insulation unit 54 covers an outer surface of the surrounding wall 512 of the reactor 51, and provides a thermal insulation effect in the form of an insulation jacket. Through this, heat is prevented from escaping to the outside of the reactor 51 through the surrounding wall 512. In this embodiment, the thermal insulation unit 54 includes an air layer 541, a ceramic wool layer 542, and a nanofiber blanket layer 543 arranged from inside to outside. However, in a variation of the first embodiment, the nanofiber blanket layer 543 may be replaced with a liquid water containing layer (not shown).

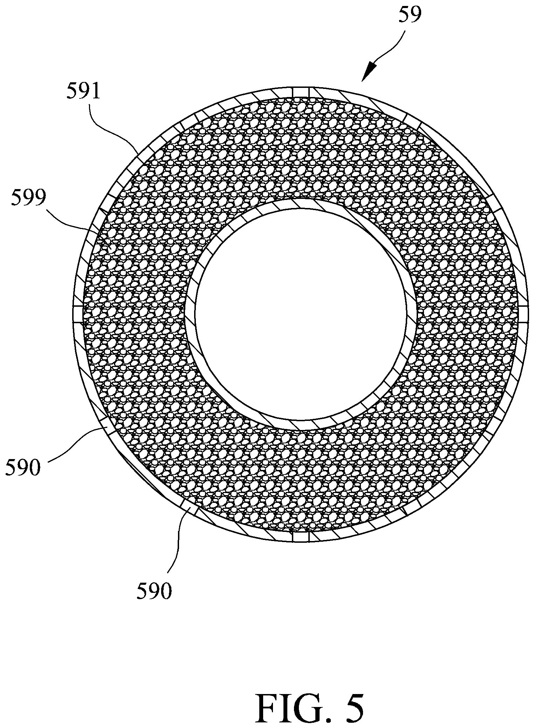

As shown in FIGS. 3 and 5, the catalyst barrel 59 has a barrel body 591 that is a hollow tubular body, that is sleeved on a top portion of the flow guide tube 58, and that includes an inner wall 5911 abutting against the flow guide tube 58, an outer wall 5912 radially spaced apart from the inner wall 5911 and provided with a plurality of through holes 590 communicating with the inner space 5101 of the waste gas reaction space 510, a bottom wall 5913 connected to bottom ends of the inner and outer walls 5911, 5912 and cooperating with the inner and outer walls 5911, 5912 to define a receiving space 5914 that communicates with the inner space 5101 through the through holes 590 and that is adapted to receive a catalyst 599, and a top cover 592 detachably disposed on top of the barrel body 591. The top cover 592 includes a cylindrical portion 5921 inserted into a top end of the flow guide tube 58, and an annular flange portion 5922 extending outwardly and radially from a top periphery of the cylindrical portion 5921 and covering a top opening of the barrel body 591. To place the catalyst 599 into the receiving space 5914 of the barrel body 591, an operator can simply remove the top cover 592 from the barrel body 591 to reveal the top opening thereof, and then pour the catalyst 599 into the receiving space 5914 through the top opening of the barrel body 591. In this embodiment, the catalyst 599 is an organic gas catalyst, or a fluorine-containing catalyst, such as perfluorocarbon (PFC).

Therefore, when the waste gas 9 enters the inner space 5101 of the waste gas reaction space 510 through the flow guide tube 58 for heating and reaction, the waste gas 9 can enter the receiving space 5914 of the barrel body 591 through the through holes 590 to react with the catalyst 599, so that the reaction temperature of the waste gas 9 can be reduced to about 905°C, thereby reducing the power of the high frequency alternating current used by the high frequency coil 53 to achieve the effect of energy saving and prolonging the service life of the heating portion 5. Furthermore, the catalyst 599 used in the first embodiment can further facilitate cracking of special gases in the waste gas 9 that are difficult to process.

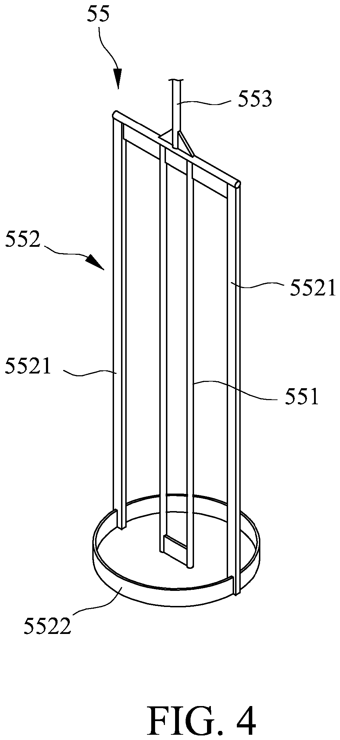

As shown in FIGS. 3 and 4, the scraper mechanism 55 is used to scrape dust or crystals attached to an inner wall surface of the flow guide tube 58 and the outer wall 5912 of the barrel body 591 due to thermal decomposition reaction of the waste gas 9. In this embodiment, the scraper mechanism 55 includes an inner scraper 551 inserted into the flow guide tube 58 and surrounded by the inner wall surface of the flow guide tube 58, an outer scraper 552 inserted into the induction heating pipe 52 and located between the outer wall 5912 of the barrel body 591 and the inner peripheral surface of the induction heating pipe 52, and a drive member 553 connected to the inner and outer scrapers 551, 552 for driving the same to rotate therewith. In this embodiment, the drive member 553 may be, for example, a rotary cylinder, etc.; and the outer scraper 552 has two spaced-apart vertical scraping rods 5521 connected to the drive member 553, and a connecting ring 5522 connected to bottom ends of the vertical scraping rods 5521. The inner scraper 551 is located between the vertical scraping rods 5521.

As shown in FIG. 2, the rear washing portion 6 is disposed downstream of the heating portion 5, and is used to wash the waste gas 9 that underwent thermal decomposition reaction in the heating portion 5 with water again so as to obtain a treated waste gas 9' with a reduced temperature.

The gas discharge portion 8 is disposed downstream of the rear washing portion 6, and is used to discharge the treated waste gas 9' from the rear washing portion 6 to the outside.

The water sink 7 is disposed below the heating portion 5 and the front and rear washing portions 3, 6 for collecting waste liquid generated after wet washing through the front and rear washing portions 3, 6.

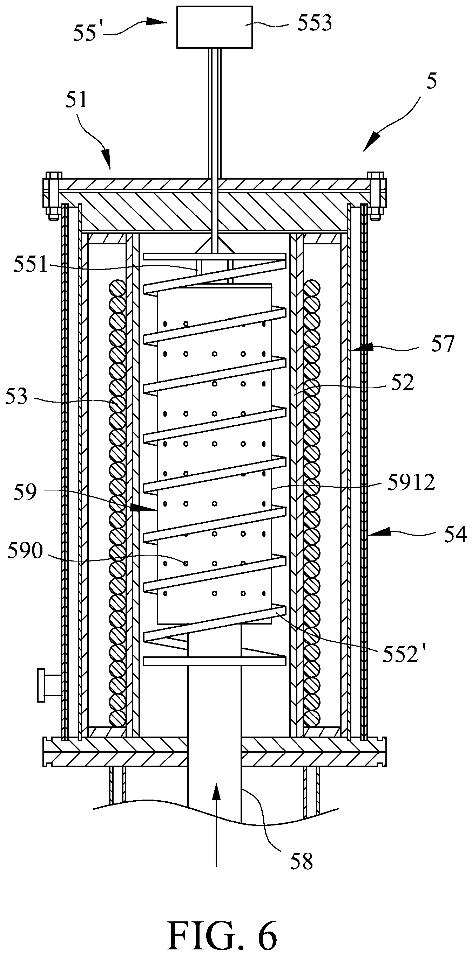

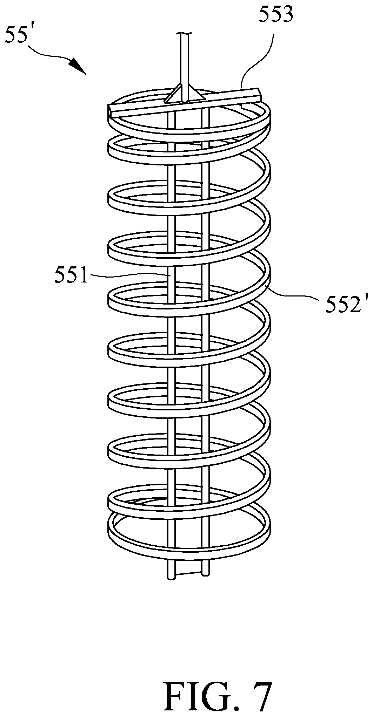

Referring to FIGS. 6 and 7, the second embodiment of the waste gas treatment equipment of this disclosure is substantially identical to the first embodiment, and differs from the first embodiment only in the structure of the scraper mechanism 55'. In the second embodiment, the outer scraper 552' of the scraper mechanism 55' is a helical scraping rod extending helically downward from the drive member 553 and surrounding the outer wall 5912 of the catalyst barrel 52.

In summary, the waste gas treatment equipment of this disclosure has the following advantages and effects:
(a) when the waste gas 9 enters the waste gas reaction space 510 for heating and reaction, the waste gas 9 can enter the receiving space 5914 of the barrel body 591 through the through holes 590 for reaction with the catalyst 599, so that the reaction temperature of the waste gas 9 can be reduced to about 905°C, and the power of the high frequency alternating current used by the high frequency coil 53 can also be reduced to achieve the effect of energy saving and prolonging the service life of the heating portion 5;
(b) the coil protector 57 can hermetically enclose the high frequency coil 53 to isolate the high frequency coil 53 from the waste gas 9, thereby protecting the high frequency coil 53 from being corroded by the waste gas 9 and prolonging the service life of the high frequency coil 53;
(c) the thermal insulation unit 54 uses the air layer 541, the ceramic wool layer 542, and the nanofiber blanket layer 543 (or the liquid water containing layer) arranged from the inside to the outside to cover the outer surface of the surrounding wall 512 of the reactor 51, and provides a thermal insulation effect in the form of an insulation jacket, so that heat is prevented from escaping out of the reactor 51 through the surrounding wall 512; and
(d) when the drive member 553 is rotated, the scraper mechanism 55, 55' can scrape the dust or crystals attached to the inner wall surface of the flow guide tube 58 and the outer wall 5912 of the barrel body 591.

Therefore, the object of this disclosure can indeed be achieved.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A waste gas treatment equipment using a high frequency heat source for treating a waste gas (9) and comprising a heating portion (5) for heating the waste gas (9), said heating portion (5) including a reactor (51), an induction heating pipe (52), a high frequency coil (53), and a coil protector (57), said reactor (51) defining a waste gas reaction space (510) for reaction of the waste gas (9), and having a bottom wall (511), a surrounding wall (512) extending upwardly from said bottom wall (511), and a top wall (513) covering a top end of said surrounding wall (512) and cooperating with said bottom wall (511) and said surrounding wall (512) to define said waste gas reaction space (510); said induction heating pipe (52) being disposed in said waste gas reaction space (510) and dividing said waste gas reaction space (510) into an inner space (5101) and an outer space (5102), said inner space (5101) being an interior of said induction heating pipe (52), said outer space (5102) being located between said induction heating pipe (52) and said surrounding wall (512); said coil protector (57) being hollow, being disposed in said outer space (5102) of said waste gas reaction space (510), and surrounding said induction heating pipe (52); said high frequency coil (53) being disposed in said coil protector (57) and surrounding said induction heating pipe (52), said high frequency coil (53) being used for generating induced current in said induction heating pipe (52) to cause said induction heating pipe (52) to generate heat for heating the waste gas (9) flowing into said inner space (5101) of said waste gas reaction space (510) through said flow guide tube (58); **characterized in that** said heating portion (5) further including:
a flow guide tube (58) inserted into said inner space (5101) of said waste gas reaction space (510) through said bottom wall (511) of said reactor (51), being spaced apart from said top wall (513) of said reactor (51) and an inner peripheral surface of said induction heating pipe (52), and being used for guiding the waste gas (9) from upstream to said inner space (5101) of said waste gas reaction space (510), said induction heating pipe (52) being concentrically disposed between said flow guide tube (58) and said coil protector (57);
said coil protector (57) enclosing said high frequency coil (53) to separate said high frequency coil (53) from said induction heating pipe (52) and to simultaneously isolate said high frequency coil (53) from the waste gas (9);
a catalyst barrel (59) having a barrel body (591) that is a hollow tubular body, that is sleeved on a top portion of said flow guide tube (58), and that includes an inner wall (5911) abutting against said flow guide tube (58), an outer wall (5912) radially spaced apart from said inner wall (5911) and provided with a plurality of through holes (590) communicating with said inner space (5101) of said waste gas reaction space (510), and a bottom wall (5913) connected to bottom ends of said inner wall (5911) and said outer wall (5912) and cooperating with said inner wall (5911) and said outer wall (5912) to define a receiving space (5914) that communicates with said inner space (5101) through said through holes (590) and that is configured to receive a catalyst (599), said through holes (590) being configured to allow entry of the waste gas (9) into said receiving space (5914) of said barrel body (591) so as to react with said catalyst (599) and reduce the reaction temperature of the waste gas (9) to thereby reduce the power of high frequency alternating current used by said high frequency coil (53), said catalyst barrel (59) further having a top cover (592) detachably disposed on top of said barrel body (591) and including a cylindrical portion (5921) inserted into a top end of said flow guide tube (58), and an annular flange portion (5922) extending outwardly and radially from a top periphery of said cylindrical portion and covering a top opening of said barrel body (591), said catalyst (599) being a fluorine-containing catalyst; and
a scraper mechanism (55, 55') including an inner scraper (551) inserted into said flow guide tube (58) and surrounded by an inner wall surface of said flow guide tube (58), an outer scraper (552, 552') inserted into said induction heating pipe (52) and located between said outer wall (5912) of said barrel body (591) and said inner peripheral surface of said induction heating pipe (52), and a drive member (553) connected to said inner scraper (551) and said outer scraper (552, 552') for driving said inner scraper (551) and said outer scraper (552, 552') to rotate therewith, said scraper mechanism (55, 55') being configured to scrape dust or crystals attached to said inner wall surface of said flow guide tube (58) and said outer wall (5912) of said barrel body (591).

2. The waste gas treatment equipment as claimed in claim 1, wherein said coil protector (57) includes:
a lower ring plate (571) disposed on said bottom wall (511) of said reactor (51);
an inner tube (572) extending upwardly from an inner periphery of said lower ring plate (571) and located between said high frequency coil (53) and said induction heating pipe (52);
an outer tube (573) extending upwardly from an outer periphery of said lower ring plate (571); and
an upper ring plate (574) connected to top ends of said outer tube (573) and said inner tube (572) and cooperating with said lower ring plate (571), said inner tube (572), and said outer tube (573) to enclose said high frequency coil (53) so as to isolate said high frequency coil (53) from the waste gas (9).

3. The waste gas treatment equipment as claimed in any one of claims 1 and 2, wherein said heating portion (5) further includes a thermal insulation unit (54) covering an outer surface of said surrounding wall (512) of said reactor (51) and configured to prevent heat from escaping to the outside of said reactor (51) through said surrounding wall (512).

4. The waste gas treatment equipment as claimed in any one of claims 1 and 2, wherein a material of said coil protector (57) is one of a high nickel alloy and a ceramic.

5. The waste gas treatment equipment as claimed in claim 1, wherein a material of said induction heating pipe (52) is one of graphite and conductive metal.

6. The waste gas treatment equipment as claimed in claim 1, wherein said outer scraper (552) has two spaced-apart vertical scraping rods (5521) connected to said drive member (553), and a connecting ring (5522) connected to bottom ends of said vertical scraping rods (5521).

7. The waste gas treatment equipment as claimed in claim 1, wherein said outer scraper (552') is a helical scraping rod extending helically downward from said drive member (553) and surrounding said catalyst barrel (59).
